(19) Europäisches Patentamt
European Patent Office
Office européen des brevets

(11) **EP 3 715 790 A1**

(12) **EUROPEAN PATENT APPLICATION**

(43) Date of publication:
**30.09.2020 Bulletin 2020/40**

(51) Int Cl.:
***G01C 21/34*** *(2006.01)*

(21) Application number: **19305425.1**

(22) Date of filing: **29.03.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Naver Corporation**
**Seongnam-si, Gyeonggi-do 13561 (KR)**

(72) Inventors:
• **ZAOURAR-MICHEL, Sofia**
**38000 GRENOBLE (FR)**
• **WILLAMOWSKI, Jutta Katharina**
**38100 GRENOBLE (FR)**
• **LEGRAS, Christophe**
**38330 MONTBONNOT ST MARTIN (FR)**
• **CLINCHANT, Stéphane**
**38000 GRENOBLE (FR)**

(74) Representative: **Regimbeau**
**20, rue de Chazelles**
**75847 Paris Cedex 17 (FR)**

(54) **SYSTEM AND METHOD FOR GENERATING TOURS**

(57)     A method, using a data processor, to generate a tour that begins at and returns to a starting point, the tour being personalized according to user preferences, which include a specified length, and in which a geographical map including a set of road crossings and roads between the road crossings is arranged as a graph in which the road crossings are represented as nodes and the roads between the road crossings are represented as arcs, the data processor computing the tour using the graph as follows:
- scoring the arcs of the graph according to the user preferences;
- initializing the tour by adding one or more path segments;
- optimizing the tour by replacing some of its path segments with path segments having a path segment score representing a path segment that promotes the user preferences;
- outputting the tour for display on a user interface.

FIG. 4

**Description**

GENERAL TECHNICAL FIELD OF THE INVENTION

The field of this invention is that of graph theory applied to electronic map data, and more precisely to the generation of personalized closed tours across a geographical electronic map.

More particularly, the invention proposes a method to generate pleasant personalized closed tours (i.e., tours that begin and end at the starting point), potentially taking into account the elevation of said tour, based on a scoring of the roads from the electronic map.

STATE OF THE ART

Closed tour generation can be seen as a routing problem with profits. A survey article discussing this problem is disclosed in: P. Vansteenwegen, W. Souffriau, and D.V. Oudheusden. The orienteering problem: A survey. European Journal of Operational Research, 209(1):1-10, 2011.

A typical example of a routing problem is where a vehicle needs to serve a number of customers. In the class of routing problems with profits, the customers to serve have to be chosen from a set of potential customers, each associated with a profit. Where the customers can be seen as nodes of a graph, the problem can then be summed up as a node routing problem; if customers are on the arcs, then it is an arc routing problem.

Existing methods for determining the most pleasant closed tour from a given location are for example disclosed in: Mercier D., Schaus P., Saint-Guillain M., Deville Y. PleasantTourFinder: an application to find the most pleasant tour from a given location. Master Thesis, Univ Cath Louvain, 2016.

Such existing methods are based on defining scores that express the attractiveness of each road segment and on applying an optimization algorithm to compute a closed tour of maximal score. The scores computed are typically based on Open Street Map (OSM) data and rely on complex computation methods, such as the computation of intersections of polygons to assess the environment, and optimized using an external constraint programming solver (OscaR). Such existing methods require significant computational resources and are therefore less efficient.

Other heuristics or algorithms for closed tour generation are also known, which propose to use strategies to produce tours starting and ending at a same given point and respecting a given target distance. They do this by selecting intermediate waypoints in order to produce finally a closed tour corresponding to a specific geometric form. Examples can for example be found in US Patent No. 8,655,591 or in US Patent No. 8,768,613. However, these existing methods focus on satisfying the given target distance and do not integrate tour quality criteria in the scores used to produce the tour.

Further, it is known that a user's experience of a tour may vary largely depending on the elevation profile of the tour, whatever its profile. For example, a typical tourist profile may prefer to minimize the difficulty of the tour, thus, minimizing the gradient (or steepness) and/or overall elevation gain; on the other hand, trail runners wanting to train to improve their performance may prefer a tour with a challenging level of elevation gain, which may include a section of the tour that climbs a minimum gradient (or steepness) and/or overall elevation gain.

However, known methods only offer the possibility for a user to compute the elevation profile *a posteriori* for a plurality of available tours and select the one that fits its preferences best. An example of such a computation is for example described in: B. Loepp, J. Ziegler, Recommending Running Routes: Framework and Demonstrator, 2nd Workshop on Recommendation in Complex Scenarios, 2018.

SUMMARY OF THE INVENTION

One aim of the invention is to provide a method that determines a tour (i.e., a trip or voyage) with pleasant, picturesque and/or interesting roads and/or paths which travel through areas with, for example, parks, rivers and/or vistas and which avoid areas with dense traffic and its accompanying pollution (e.g., by penalizing main roads and highways).

Another aim of the invention is to provide such a method that operates efficiently to minimize the need for significant computational resources.

A further aim of the invention is to provide such a method that takes into account preference desired by the user (i.e., user preferences) for the tour such as the length of the tour, points of interest or vistas to see along the tour, the preferred type of path (e.g., pedestrian or residential), proximity to parks and the elevation profile of the tour (gradient (or steepness) and/or overall elevation gain).

Therefore, according to one aspect, the present invention proposes a method, using a data processor, to generate a tour that begins at and returns to a starting point, the tour being personalized according to user preferences, which include a specified length, and

in which a geographical map including a set of road crossings and roads between the road crossings is arranged as a graph in which the road crossings are represented as nodes and the roads between the road crossings are represented as arcs, the data processor computing the tour using the graph as follows:

- scoring the arcs of the graph according to the user preferences;
- initializing the tour by adding one or more path segments;
- optimizing the tour by replacing some of its path segments with path segments having a path segment score representing a path segment that promotes the user preferences (e.g., by reaching the specified length within a given margin);
- outputting the tour for display on a user interface.

Said steps use an approach that is simple, easy to implement and rather intuitive and allow the generation of better tours through an easy improvement of a first closed tour.

The method proposed avoids using complex representations of the problem such as polygons for the neighborhood of arcs.

It has the advantage to provide the user with a non-trivial closed tour, without needing significant computing resources.

- In an implementation, said initializing links a first arc leaving the starting point and a second arc entering the starting point with the shortest path segment, and wherein said initializing and sets a current node to the starting point of the tour, and said optimizing further comprises, while the total length of the tour is inferior to a given threshold determined by the specified length and an acceptable margin, iteratively performing the following steps: Drawing a random distance d to travel on the next arc to add to the tour from a continuous probability distribution with a given set of parameters;
- Computing the set of nodes in the graph within a given distance from the current node;
- If the set of nodes computed at the previous step is empty, go back to step a) eventually modifying the set of parameters, otherwise, continue performing the following steps;
- For each node p of the set of nodes, iteratively performing the following steps:

    a) Computing the score of a computed path segment from the current node to the node p, such as the shortest path segment;
    b) Verifying that there exists a path segment from the node p back to the starting point of the tour such that the total length of the tour does not exceed the specified length of the path segment;
    c) Computing the score of the computed path segment;

- Sorting the list of candidate nodes according to the score of their associated computed path; and
- Choosing the node associated with the path segment having the highest score, or randomly choosing one from the best k paths, k being a parameter of the method.

It can further comprise the following additional steps of post processing aiming at avoiding detours in the tour:

- Creating a list of non-conform detours by finding path segments of the tour being longer than the shortest path segment from the starting node of the path segment to the end node of the path segment by a given factor;
- Restricting the list of non-conform detours to the path segments of the tour having a score lower than a given threshold;
- Replacing the path segments in the list of non-conform detours by their associated shortest path segments.

The method can further be complemented through the following steps:

- Defining the initial route as a subset of arcs of the tour
- For a given number of iterations, performing the following steps:

    a) For each pair of consecutive arcs AB and EF in the route, where A, B, E, and F are nodes of the graph, iteratively performing the following steps:

        i. Enumerating all the feasible tour wherein the previously chosen path segment from B to E is substituted by a sequence comprising:

        • A new arc CD;
        • The shortest path segment from B to C;

• The shortest path segment from D to E;

ii. For each new path segment from B to E, iteratively performing the following steps:

        a. Evaluating the score of each new tour
        b. Sorting the list of new tour by their score
        c. Choosing the new tour having the highest score, or randomly choose one from the best k tours, k being a given integer;
        d. Updating the route by selecting a number of arcs of the current tour

In particular, the method can comprise the following additional steps of post processing aiming at avoiding detours in the closed tour:

- Creating a list of non-conform detours by finding path segments of the tour being longer than the shortest path segment from the starting node of the path segment to the end node of the path segment by a given factor;
- Restricting the list of non-conform detours to the path segments of the tour having a score lower than a given threshold;
- Replacing the path segments in the list of non-conform detours by their associated shortest path segment.

In another implementation, the set of preferences of the user comprises elevation preferences. In particular, the elevation preferences can comprise:

- a desired elevation gain interval, said elevation gain being the sum of all positive elevation among the arcs of the tour; and/or
- a desired maximum steepness.

In such a method, the length of the arcs of the graph can be replaced by a weight term comprising:

- the length of the arc;
- a penalty term for penalizing any arc having a steepness higher than the user's desired maximum steepness.

The score optimization method can be a hierarchical optimization method wherein the first objective is to achieve the desired elevation gain and the second objective is to maximize the score while keeping the elevation gain as a constraint.
An additional step can be performed before constructing a first tour, said additional step comprising selecting an intermediary point which elevation gain from the starting point is the desired one within a given margin.
The invention also proposes a computer program product comprising code instructions to execute the method proposed, as well as a computer-readable medium, on which is stored a computer program product comprising code instructions to execute such a method.

BRIEF DESCRIPTION OF THE DRAWINGS

The above and other objects, features and advantages of this invention will be apparent in the following detailed description of an illustrative embodiment thereof, which is to be read in connection with the accompanying drawings wherein:

- Figure 1 illustrates an example of system architecture in which the method according to the invention is performed;
- Figure 2 illustrates the steps of an example of greedy algorithm that can be used with a method according to the invention;
- Figure 3 illustrates an example of a tour generated by the greedy algorithm for a 10km loop;
- Figure 4 illustrates the steps of an example of dynamic arc orienteering algorithm that can be used with a method according to the invention;
- Figure 5 illustrates an example of a tour generated by the dynamic arc orienteering algorithm for a 7km loop;
- Figure 6 illustrates the step of post-processing that can be performed;
- Figure 7 illustrates an example of calculation steps for determining a penalty associated with the steepness of an arc;
- Figure 8 illustrates an example of two tours computed with the same preferences but for which a different cutoff was used; and
- Figure 9 illustrates an example of a tour generated using an intermediary point.

DETAILED DESCRIPTION OF THE PREFERRED EMBODIMENT

*System Architecture*

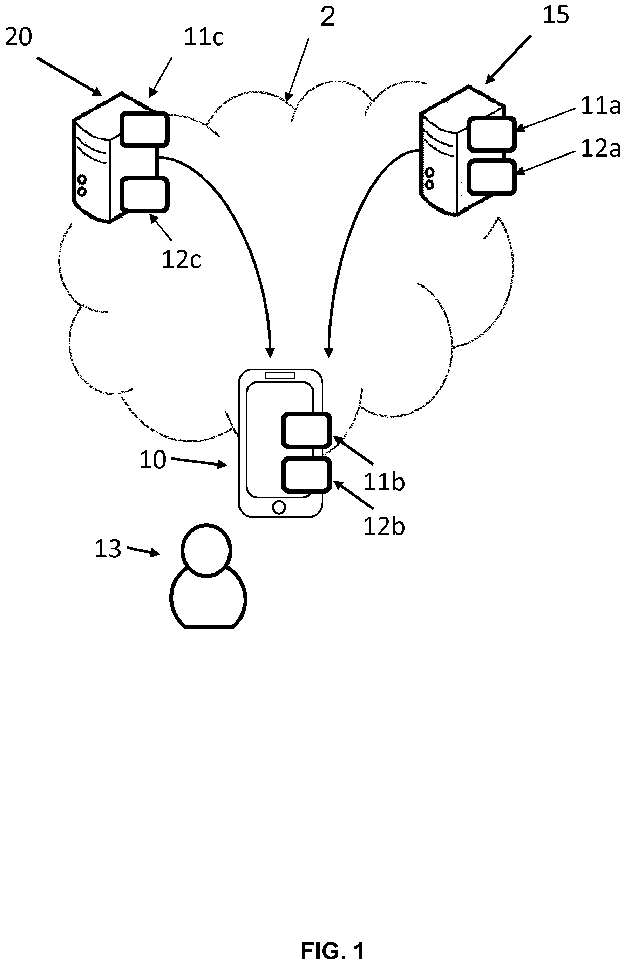

The tour generation method presented hereunder may be implemented within a system architecture such as that illustrated in **Figure 1,** which comprises two servers 15 and 20 and a user device 10 that communicate over a network 2 (which may be wireless and/or wired) such as the Internet for data exchange. Each server 15 and 20 and the user device 10 include a data processor (11a, 11c, and 11b, respectively) and memory (12a, 12c, and 12b, respectively) such as a hard disk.

The server 15 is a map server, which can be for example an external service accessible by an application programming interface (API) such as Open Street Map.

The server 20 is an elevation data server, which can be for example an external service accessible by an application programming interface (API) such as BD ALTI® from IGN (the French National Institute of Geographic and Forestry Information).

The user device 10 is used to present on its user interface (e.g., display and/or speaker) the desired closed tour to user 13. The user device 10 may be any device that communicates with the servers 15 and 20, including a desktop computer, a navigation system (e.g., that may be installed in a car or on a bike), a laptop computer, a cell phone, a digital watch or other user wearable device.

In one embodiment, the tour generation method presented hereunder operates on server 15, server 20, and/or user device 10. Alternatively, the tour generation method may operate on an independent server that communicates with server 15, server 20, and/or user device 10.

In another embodiment, it is noted that the two servers 15 and 20 may be merged. In yet another embodiment, the functionality of the two servers 15 and 20 may be merged into a standalone user device 10.

*Map representation and terminology*

A map is represented by the tour generation method as a graph where the road crossings (i.e., intersections) are represented as nodes.

Every road between two intersections is represented by an edge or by an arc (i.e., a directed edge) (see https://en.wikibooks.org/wiki/Graph_Theory/Definitions) between two nodes. An edge may be replaced by two directed arcs, one for each direction; also, two arcs may be replaced by an edge, as long as knowledge of each arc's direction is not required.

In the case of pedestrian roads (e.g., trails, paths, etc.), all roads can be considered to be bidirectional. An edge can therefore be substituted by two arcs of opposed directions to take into account the direction of the pedestrian on the road.

A path segment is a list of successive edges or arcs. A path segment may include one or more edges or arcs.

A route is an ordered list of edges or arcs (not necessarily adjacent) that starts at an origin node.

A linking path is a path segment that links two arcs of a route.

A tour associated with a given route is a closed path comprising arcs taken from the route and linking paths there between.

Using the representation of the map as a graph, the tour generation method generates pleasant closed tours through solving two NP-hard combinatorial problems:

1. A knapsack problem where the goal is to select on a map the path segments that bring the highest value to the user (according to his preferences) within a budget constraint; and
2. A traveling salesman problem where the goal is to find the shortest route that visits those path segments.

**Basic tour generation**

*Score Function for a given path*

The tour generation method relies on the following information:

- An initial position, from which the tour is to start and to which it is to end;
- Knowledge of the region in which the tour is to be situated in the form of a map of the region.

For a given path segment selected through trip planning tools, path segment scores are determined using standard OSM data and assigned to path segments.

The path segment scores assigned to path segments may for example be computed by the data processor 11a, 11b of the server 15 and/or the user device 10.

The path segment scores assigned to path segments express the value said path segments would bring to the route.

In particular, for a given path segment, the tour generation method computes the path segment scores through rewards and penalty terms.

More specifically, a scoring weight - referred to as *weight*(e) - is determined for each directed edge e (i.e., arc e) of a given path segment, through summing the rewards and penalties determined for said directed edge.

By way of example, the computation for a given directed edge e can be as follows:

*1. Use the OSM type of path.*
Each directed edge is associated in the OSM data with a type of path information, such as one of the following categories: "pedestrian", "foot_track" or "residential".
A reward is assigned to directed edges extracted from the OSM data corresponding to the user's preferred type of path, whereas no reward (or a penalty) is assigned when directed edges belong an undesirable type of path. For example, a pedestrian road should have a higher score assigned than a main road.
*2. Use parks and "land use" information.*
A reward is assigned to directed edges extracted from the OSM data located in or near parks and open space, as well as with scenic vistas or other geographic formations (e.g., rivers, mountains, etc.). For example, directed edges along a river and directed edges belonging to a hiking trail are assigned a reward.
*3. Use main road information.*
A penalty is typically applied to directed edges extracted from the OSM data corresponding to roads. In addition, penalties are typically applied for directed edges next to main roads (since it can be seen as a feature indicating potential busy traffic, and possible pollution).
*4. Use touristic points of interest.*
A reward is assigned to directed edges extracted from the OSM data located along or near touristic points of interest, such as artistic works (in the OSM model: "Tourism=artwork"), religious edifices ("amenity=place of_worship"), or relevant architectural attractions ("historic=*") and finally squares in towns.

For each pair of successive directed edges, an additional penalty term is calculated and added to the path segment score. This additional term - noted $turn(e_i e_{i+1})$ - is computed as a function of the true angle between the two roads on the map corresponding to the two successive directed edges to penalize tours with sharp turns. It aims to avoid complex geometries for the tour.

Further, two penalty terms are calculated for the path segment. These terms - denoted as $ev_{penalty(e)}$ for directed edges and $nv_{penalty(n)}$ for nodes - are determined as a function of the number of times a given directed edge or a given node would be traversed in the path segment by a pedestrian walking the path. These terms thus penalize path segments where the same directed edge or node is traversed more than one time.

The path segment score of a given path segment *p* composed of directed edges $e_i$ is therefore computed as follows:

$$score(p) = \sum_{e \in p} weight(e) + \mu \times \sum_{i=1}^{|p|-1} turn(e_i e_{i+1}) + \gamma \times \sum_{e \in p} ev_{penalty(e)} + \gamma \times \sum_{n \in p} nv_{penalty(n)}$$

where $\mu$ and $\gamma$ are multiplicative factors adapted to the preferences of the user (i.e., user preferences).

Other rewards and penalties can further be contemplated in place or in complement to those above presented.

A reward or penalty based on the shape of the loop and or the simplicity of the loop can for example be calculated and added, as may be specified in the user preferences.

A further reward promoting sequences comprising a plurality of successive good directed edges (i.e., directed edges with weights above a given threshold) can also be promoted and added.

*Greedy algorithm*

Using the calculation of path segment score above described by way of example, a first simple loop path can be generated as through the steps hereunder described.

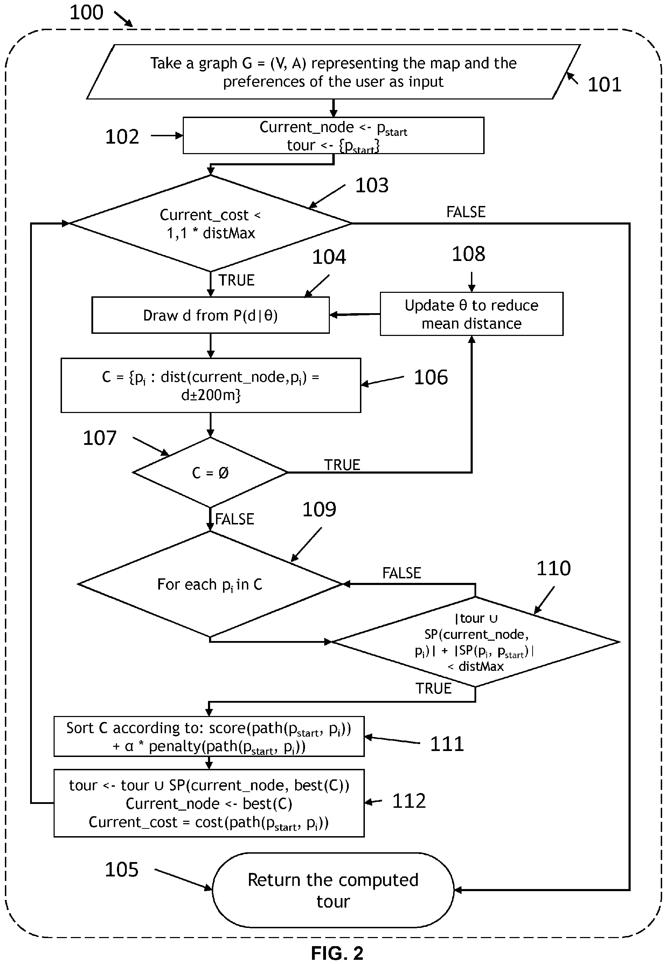

The algorithm 100 illustrated on **Figure 2** is a generative method that aims at creating a good closed tour following a simple method.

The method iteratively adds new directed edges to the tour starting from the desired starting point until the desired distance is reached.

In a first step *101,* the data processor 11b of the user device 10 exchanges with server 15 to obtain the OSM map data for a given map of an area around the position from which the tour should start and end (i.e., starting point).

Said data processor also retrieves a set of variables representing the preferences of the user as input (i.e., user preferences).

Said user preferences comprise for example the desired length distMax of the closed tour, as well as parameters such as the desired path type (e.g., pedestrian or residential), denoting the preferred type of roads of the user, desired points of interest or vistas to see along the closed tour, desired proximity to parks and vistas and the desired elevation profile of the closed tour (gradient (or steepness) and/or overall elevation gain).

User preferences can be obtained in real time through a user interface of the user device 10 with which the user 13 interacts or retrieved from memory 12b of the user device 10.

The current node is then initialized to the value corresponding to the desired starting node $p_{start}$ and the tour is initialized to the singleton $\{p_{start}\}$ and the length of the tour current_cost is initialized to the value 0 (step *102*).

While the length of the tour, current_cost, is smaller than the desired length of the closed tour (comparison of step *103*), the following steps are repeated:

- A random distance d is drawn from a probability distribution $P(d|\theta)$ having a set of parameters $\theta$ (step *104*);
- A set C containing every crossing (*i.e.* every node) approximately within a distance d (for example d $\pm200$m) from the current node is created (step *106*);
- If the set of road crossings C is empty, change the parameters $\theta$ of the distribution and go back to *104* to draw a new distance d (step *107*); else:
- Iterate over each crossing (noted $p_i$) of the set C (step 109) and do the following test:
  o Verify that if the shortest path segment from the last node of the path segment to the crossing $p_i$ is added to the current tour, the sum of the total length of the tour and the length of the shortest path segment from $p_i$ to $p_{start}$ is smaller or equal to the desired length of the tour distMax. If not, remove $p_i$ from the set of road crossings C (step *110*);
- Sort the set of road crossings C according to the score of the associated path segment from $p_{start}$ to each $p_i$ of the set (step *111*);
- The best crossing of the set C, or a crossing randomly chosen from the k best road crossings of the set C according to the previous sorting is selected to be added to the path, the shortest path segment from the current node to the selected node is added to the current tour, the length of this path segment is added to the length of the tour current_cost, and the current node is updated to this selected node (step *112*).

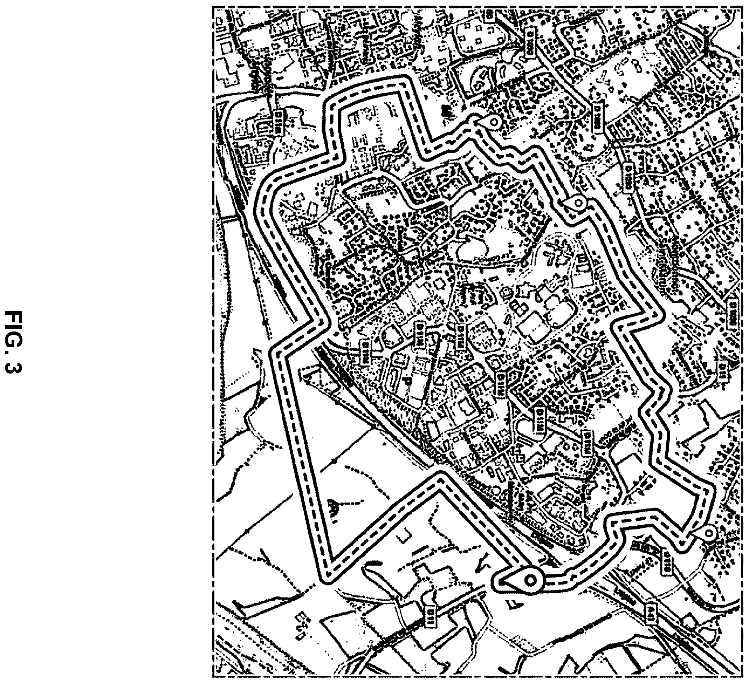

When the tour is complete, it can be outputted for display on a user interface (step *105*). An example of a 10km route generated by this algorithm is given in **Figure 3.**

These steps can be described using pseudocode as follows:

**GreedySP (100):**

| | |
|---|---|
| Take a graph G = (V, A) representing the map and the preferences of the user as input | (101) |
| current_node <- starting_point | (102) |
| while current_cost < 1.1*distMax: | (103) |
| 1) Draw d from $P(d|\theta)$ (for instance from a gamma distribution) | (104) |
| 2) Compute Weighted Shortest Path Segments for the set of nodes p such that distance(current_node, p) = d $\pm200$m | (106) |
| 3) If the set of nodes is empty, update $\theta$ to reduce the mean distance and redraw a distance d | (107, 108) |
| 4) For each of the nodes p: | (109) |
| i) Compute the score of shortest path segment: score(path(p)) | |
| ii) Check that if we go to p, then we can still go back to the starting point without exceeding the total distanceMax | (110) |
| iii) Compute some penalty or distance between the path segment going to p and the path segment already done, based on distance and or angles | (111) |
| 5) Criteria(p) <- score(path(p)) + $\alpha$ penalty(path(p)) | |
| 6) Sort, possibly randomize the top of the list and pick one node p' | |
| 7) current_node <- p' | (112) |

(continued)

**GreedySP (100):**

8) current_cost += cost(path(p))                                                                                (112)

Compute the final score(path(p)), and eventually post-process the resulting path segments to remove
useless directed edges and to optimize it a bit further                                                          (105)

*Dynamic arc orienteering algorithm*

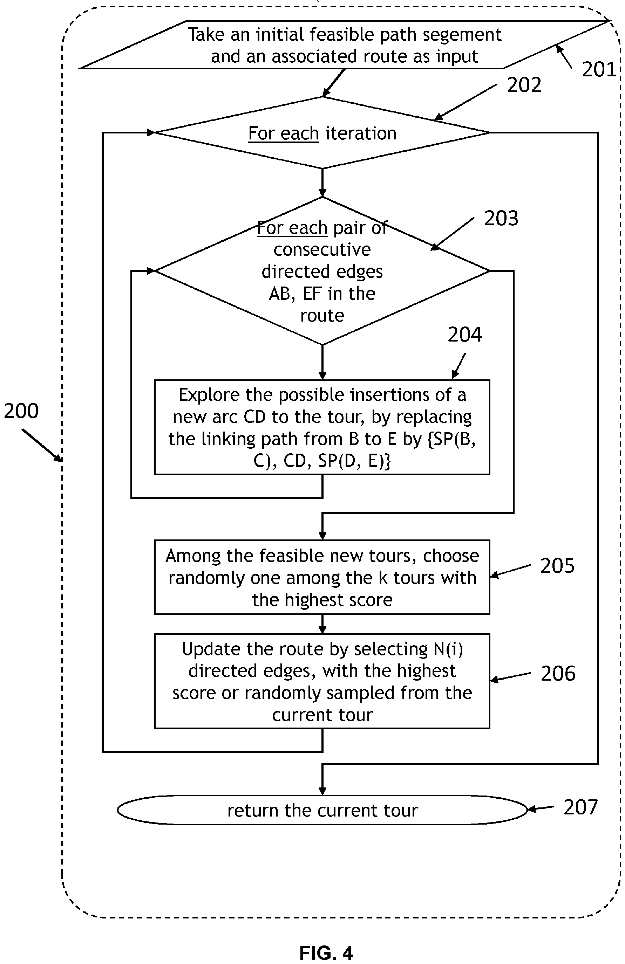

In what follows, SP(A, B) denotes the shortest path segment in the graph from a node A to a node B.
The algorithm 200, illustrated in **Figure 4,** builds a closed tour, starting from an initial, non-optimal, closed tour provided by the greedy algorithm as here above described (step *201*).
Data processor 11 performs the following steps, which are repeated for a given number of iterations (the current iteration is denoted as i) depending on the processing time available (test *202*) to optimize the tour:

- Iterate over each pair of consecutive arcs (directed edges) AB, EF in the route (step *203*):
  ◦ Create a list of feasible new tours by enumerating all the possible insertion of a new arc (directed edge) CD to the tour in order to replace the linking path from B to E by {SP(B, C), CD, SP(D, E)} (step *204*);
- Among the listed feasible new tours, choose the best or choose one randomly among the best k tours, according to their score (step *205*);
- Define the new route (with a score that promotes user preferences) by selecting a subset of a given number N(i), depending on the current iteration, of arcs (directed edges) from the tour that will be fixed for the next iteration of the algorithm (step *206*).

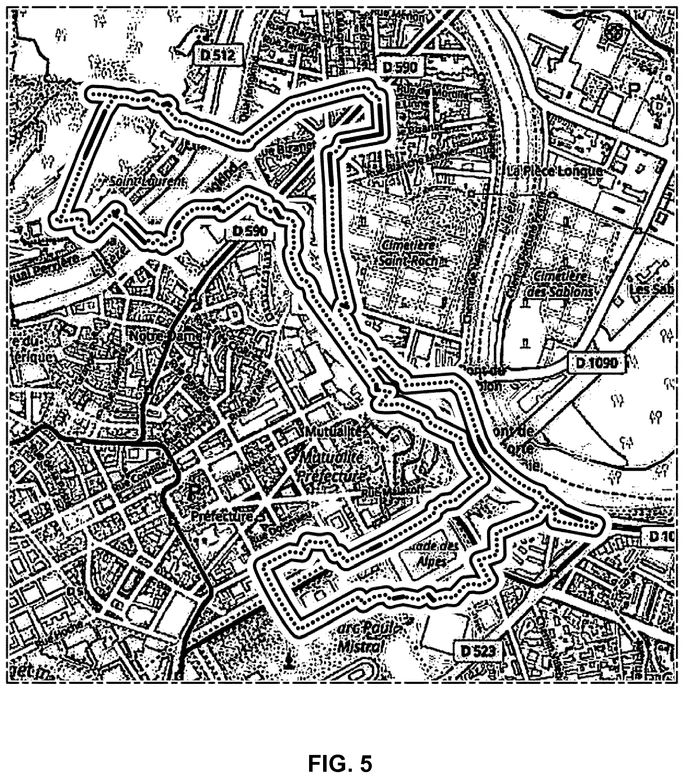

The tour obtained at the end of this procedure is then returned for display on a user interface (step *207*).
An example of a 7km route generated by the algorithm 200 in Figure 4 is given in **Figure 5.**
These steps can be described using pseudocode as follows:

**DynamicArcOrienteering (200):**

Take an initial feasible path segment as input                                                                   (201)

For each iteration i:                                                                                            (202)

    - For each pair of consecutive (but not necessarily adjacent) arcs AB, EF in the route:                  (203)

        • explore the possible insertions of a new arc CD to the route, by replacing the linking path from B to E with the path segment defined by the sequence SP(B, C), CD, SP(D, E).                     (204)

    - Among the feasible new tours (i.e. tours where no node is visited more than once and total distance less than Dmax), choose randomly one among the k tours with the highest score.              (205)

    - Update the route by selecting N(i) arcs, with the highest score or randomly sampled from the current tour.                                                                                       (206)

    - Stop and return the current tour when the maximal number of iterations is reached or no more insertions are possible.                                                                            (207)

Different strategies can be adopted to define the function N(i) that represents the number of arcs or edges of the tour that are fixed at iteration i, as well as how to select them.
An example of such astrategy can be found in:

• W. Souffriau, P. Vansteenwegen, G. Vanden Berghe, and D. Van Oudheusden. The planning of cycle trips in the province of east flanders. OMEGA, 39:209-213, 201; where the original Arc Orienteering Problem (AOP) heuristic fixes the inserted arc (directed edge) CD at each iteration.

However, by doing that, if the tour included some arcs that were really good but part of shortest path segments, these can be discarded by future insertions. Another limitation of the original AOP heuristic is that it does not reconsider the choice of the route arcs. That is why the method proposes to fix the route arcs dynamically to make sure the extensions are done while keeping the best visited arcs, but it has been observed experimentally that choosing the best arcs seems to quickly lead the algorithm in a local minimum. To avoid that, the route arcs are randomly selected at each iteration, which significantly improves the results.

*Post-processing*

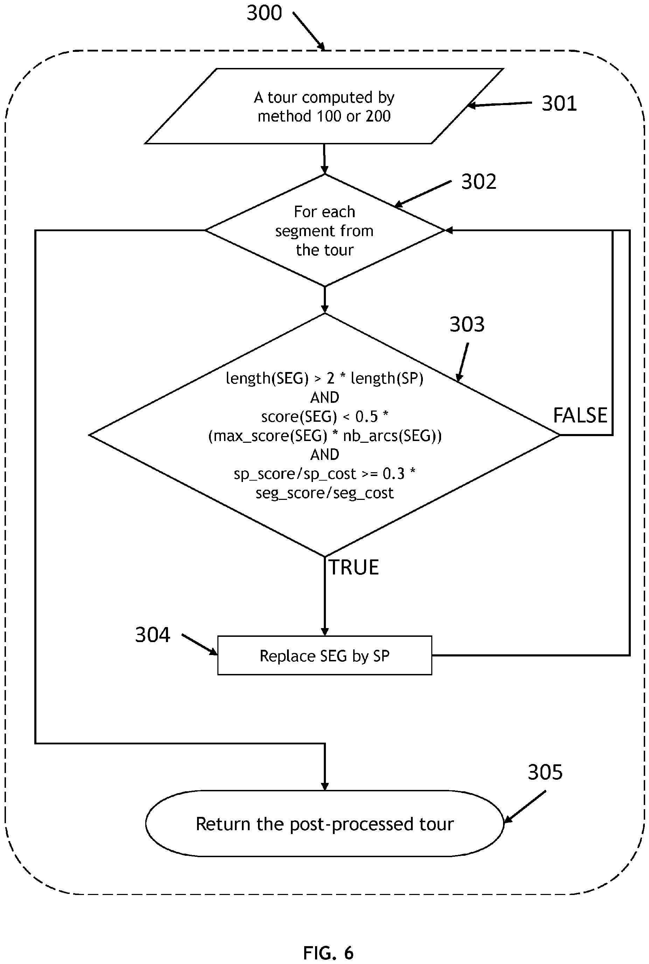

A post processing method as illustrated in **Figure 6** can be performed on the closed tour outputted by any of the algorithms described here above (input data *301*) to improve the shape of the tour, the following steps are then performed on the tour:

- Iterate over each path segment from a node A to a node B of the tour, applying the followings procedure (step 302):

  • Compare the path segments from A to B on the tour and the shortest path segment from A to B. Intuitively, if the path segment is much longer than the shortest path segment, it can be seen as a detour, and it is interesting only if it brings a good score. Therefore, in that case the ratio score/length of the path segment is compared to the shortest path segment as well as its maximal score (step *303*);
  • if, according to the previous comparisons the path segment is viewed as a detour, replace the path segment from A to B by the shortest path segment between A and B (step 304);

- The tour obtained at the end of this procedure is then returned to the user (step *305*).

This can be formulated as the following logical test:

If (length(SEG) > 2 * length(SP)) and
(score(SEG) < 0.5 * (max_score(SEG) * nb_arcs(SEG))) and
(sp_score/sp_cost >= 0.3 * seg_score/seg_cost)
then replace the SEG by SP

The goal of this post-processing is to remove some artifacts and artificial detours, such as detours solely to achieve the desired distance. By doing that, the algorithm is able to save some costs *i.e.* distance, that can be reinvested in some part of the loop. One option is to greedily expand the loop where it has good scores. For instance, by applying the local greedy approach described at the beginning, another option is to rerun the dynamic arc orienteering heuristic on this shortened route to expend it and maximize the score.

Finally, multiple solutions can be computed in parallel. Then, one can simply return one or several solutions to the user but an alternative post processing can promote diversity in the set of path segments proposed by using Maximum Marginal Relevance techniques. Another possibility is to select among the closed tours with the highest scores, those with the best "geometry" or shape. For instance, one could select the closed tours that form the largest polygons, by comparing the surfaces delimited by the closed tours, or the simplest ones, by comparing the number of intersections.

**Tour generation taking into account elevation**

*Collection of the elevation data*

To take elevation into account for tour generation, elevation data needs to be available for all arcs in the graph, which is not always the case (this information is for example not provided by OpenStreetMap).

To obtain these missing elevation data, namely the elevation of all road crossings or nodes of the routing graph, a specialized topological database is used. In one embodiment, elevation data is acquired from server 20 using an API.

Topological databases usually provide the information according to the digital elevation model (DEM), DEM standard, composed of 25 by 25 meters squares.

However, when generating tours, this level of precision is too low. Consequently, directly using for each node the mean elevation of the square in which it is located leads to the following problem: many of the arcs linking the various nodes are of short length, typically a few meters; such path segments are thus either located within one of the squares and thus wrongly estimated as totally flat or located on the border of two squares and are wrongly estimated as too steep (if these squares have different mean elevation values).

To overcome this problem, the data is preprocessed by the data processor 11b of the user device 10 to estimate the elevation of each of the nodes using inverse distance weighting from the four closest square's elevation data.

Each square of the grid is represented in its center location. The elevation of each node is then computed as a weighted sum of the elevations of the four closest surrounding center locations. In this sum, the closer the node to the center location, the higher the impact or weight it has in the computation of the sum.

The sum's weights are proportional to the inverse of the distance between the nodes and the center locations:

$$\hat{Z}(\vec{S}) = \frac{\sum_{i=1}^{n} \frac{Z(\vec{S_i})}{\left\|\vec{S_i} - \vec{S}\right\|^p}}{\sum_{i=1}^{n} \frac{1}{\left\|\vec{S_i} - \vec{S}\right\|^p}}$$

Where $S$ is the location where the elevation must be determined, $S_i$ the location with a known elevation, $\hat{Z}(x)$ is the elevation at location $x$, $\| \: \|^p$ represents the p-norm and $n$ is the number of closest surrounding center locations considered. In particular, this method gives reasonable results with $p = 1$ and $n = 4$.

*Elevation profile preferences - general presentation*

Elevation has two aspects: elevation gain and steepness (or gradient). Both have an important impact on the difficulty of a tour.
With respect to elevation gain, it is the total cumulative elevation gain of the tour, i.e. the sum of elevation gain of all successive segments, that is generally taken as the measure for the difficulty of a tour, whereas with respect to steepness the difficulty is rather measured on the steepest parts of the tour.
In walking (or hiking), a well-known rule defines the impact of elevation in walking (uphill) called Naismith's rule.

See for example:

• https://en.wikipedia.org/wiki/Naismith's_rule

In the trail running community, the additional effort brought by elevation gain is usually converted into adding extra distance to the itinerary. A rule of thumb to consider, in terms of time and effort, 100m of height difference (D+) is equivalent to running horizontally 1km.

See for example:

• https://www.blog-course-a-pied.com/ajouter-1-kilometre-100-metres-denivele-positif /

For example, running 10km with 300m of D+ is equivalent to running 13km.
The trail running community also thinks about elevation in terms of its impact on speed using rules such as "every percent gradient of incline (going uphill) will slow you by 7-9 seconds per kilometer, and every percent gradient of decline (going downhill) will aid you by 5 seconds per kilometer".

See for example:

• https://runnersconnect.net/hill-running-training/

Based on these observations, a set of basic profiles can be determined, for example three successive classes or difficulty levels: flat, hilly and alpine. Each of them corresponds to and implements a different acceptable range of cumulated elevation gain and steepness for tours. The associated elevation profiles can be:

- Flat profile: the cumulated elevation gain is less than 1% of the distance, e.g. <100 m for 10 km and the maximum steepness is 5%;
- Hilly profile: the cumulated elevation gain is between 1% and 3% of the distance, e.g. [100, 300] m for 10 km and the maximum steepness is 10%; and
- Alpine profile: the cumulated elevation gain is more than 3% of the distance, e.g. >300 m for 10 km and the maximum steepness is 15%.

These preference profiles can be predetermined by the system or created by the user, and stored on the mobile device 10, using memory 12b.
With respect to elevation gain, some users may even have more specific needs and target a specific interval. In order to tackle such requirements, on top of the chosen profile, a user may enter any elevation gain interval he desires to be stored in memory 12b of the mobile device 10 and the method will produce a corresponding tour (if one exists in the neighborhood).

For steepness, it is not pertinent to define an overall target steepness to match but rather steepness values to avoid. Indeed, with steepness the objective is not to produce a tour that has always the same acceptable steepness but rather one that contains flat but also steeper segments preferably only up to a certain degree. While the elevation gain objective applies to the whole tour (it is constituted by the sum of the elevation gain of each segment), the steepness constraint rather applies to most segments of the tour, but not necessarily all. Indeed, the user may sometimes prefer and accept to include a very short steep segment in a tour if only that segment enables to reach a very pleasant area or path within the tour.

Thus, the method does not strictly forbid to go over the preferred steepness threshold and rather penalize too steep segments. Another possibility is to restrict the cumulated length of subsequent segments that are above the steepness threshold to avoid including too many difficult segments in the tour.

In any case, the elevation gain already provides a natural limit for steepness in the sense that with a flat profile for a given total distance, the total elevation gain is already limited, and thus the resulting tour may either only include in a small proportion or cumulated distance with high steepness or a higher proportion or cumulated distance with lower steepness.

*Generation of the tour according to the elevation profile preferences*

In order to generate profiles that matches the selected profile and the particular values determined by the user, the previously described method for generating a pleasant path can be modified to implement elevation gain and/or maximum steepness constraints.

To enforce the limit relating to steepness, a penalty is computed and added to the path segment scores of the path segments that are steeper than the profile threshold in the computation of the shortest path segments.

To reach the desired range of elevation gain, two steps can be performed - alone or in combination - by the data processor 11:

- Apply a hierarchical optimization step that considers elevation gain as the first objective and the pleasantness score as second until the current solution has the right elevation gain. Then when the elevation gain is in the desired range, switch back to maximizing the pleasantness keeping the elevation range as a constraint;
- Find an intermediate point, start by choosing an intermediate point located at an appropriate elevation, within a given margin and then start the tour generation from this point, including the path segment from the starting point to the intermediate point.

The penalty introduced for steep segments is used to limit the maximum steepness, but does not strongly exclude steep segments from the tour completely. This translates the following underlying idea: to avoid taking a steep direct path to reach a given destination, a user may accept making detours, i.e. covering more distance but avoiding the steep segments. The weighted shortest path segments that include this penalty will represent exactly this preference.

Thus, the shortest path segment computation from the tour generation method is modified to penalize steep segments, the penalization starts at the steepness threshold and increases with increasing steepness. An example 400 of said penalty calculation is illustrated on

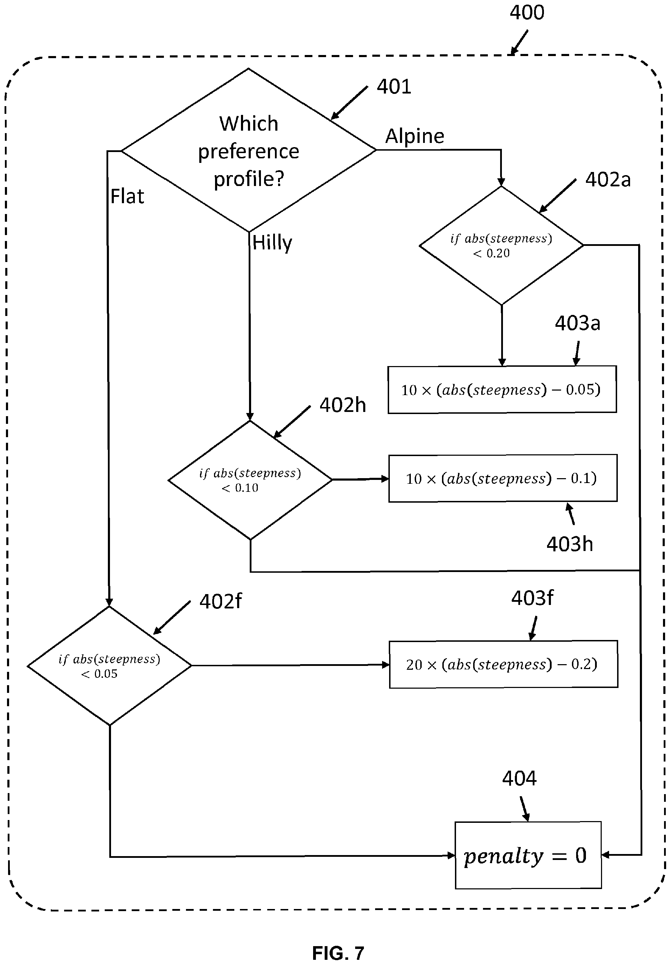

**Figure 7,** said calculation is as follows:

- In test 401, data processor 11 retrieves the preference profile of the user and determine whether the preference profile is of the "Flat", "Hilly", or "Alpine" type;
- In case of a flat profile, the data processor 11 checks (test 402f) if the steepness is above a given threshold (for example 5%); the penalty is then calculated as follows in steps 404 and 403f:

$$penalty = \begin{cases} 0 \ if \ abs(steepness) < 0.05 \\ 20 \times (abs(steepness) - 0.05) \ otherwise \end{cases}$$

- In case of a hilly profile the data processor 11 checks (test 402h) if the steepness is above a given threshold higher than the flat profile one (for example 10%); the penalty is then calculated as follows in steps 404 and 403h:

$$penalty = \begin{cases} 0 \ if \ abs(steepness) < 0.10 \\ 10 \times (abs(steepness) - 0.1) \ otherwise \end{cases}$$

- In case of an alpine profile the data processor 11 checks (test 402a) if the steepness is above a given threshold higher than the flat profile one (for example 20%); the penalty is then calculated as follows in steps 404 and 403a:

$$penalty = \begin{cases} 0, & if\ abs(steepness) < 0.20 \\ 10 \times (abs(steepness) - 0.2), & otherwise \end{cases}$$

Then, in the computation of the shortest path segment, the weight of each arc is modified as follows:

$$Weight = distance \times (1 + penalty)$$

Increasing the penalty by a factor 1 is thus equivalent to increasing the distance accepted to avoid the steep segment by the length of that segment. For instance, with the flat profile, a segment with a steepness of 15% and length d will be penalized such that the algorithm will prefer taking a (flat) path that is up to 3 times longer than the steep segment.

With these weights computed, the hierarchical optimization is performed, making elevation gain the first objective to reach before maximizing the path segment scores. It means that at each iteration of the algorithm, the selected insertion is the one that makes the total elevation gain closer to the target (or at least not farther). If several insertions have the same impact on the elevation, then the algorithm chooses the one among them that maximizes the path segment score. Once the current tour's elevation lies in the target elevation range, the algorithm will choose the next insertions in a way to maximize the path segment score while still keeping the elevation with the appropriate range.

However, this hierarchical optimization step can still fail to provide a tour with the desired elevation profile if regions of appropriate elevation are not "close enough". More precisely, as mentioned before, the algorithm relies on preprocessed weighted shortest path segments that link points which are within a "cutoff" distance from each other. When considering a new insertion at each iteration, the number of possibilities depends directly on the number of arcs that are linked with shortest path segments to the current tour. Therefore, the larger the cutoff parameter, the more alternatives are accessible and then the more likely it is to find one that improves the elevation gain (making it closer to the target range).

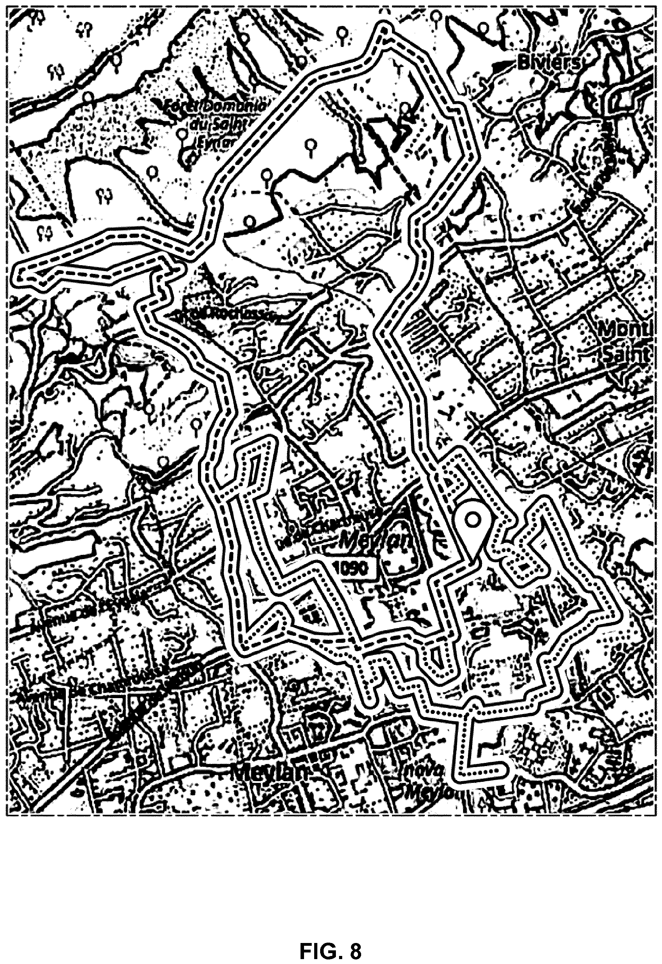

**Figure 8** illustrates this idea by showing two tours that are computed with the same requirements but for which a different cutoff was used in the shortest path segments preprocessing step.

It can be observed that with the larger cutoff (dashed lines) the target elevation is reached and the tour has a good environmental score. With the smaller cutoff (doted lines), the algorithm does not manage to reach the region with more elevation and so it selects all the small arcs that bring a little elevation gain resulting in a tour that do not satisfy the elevation requirement and with a bad geometry.

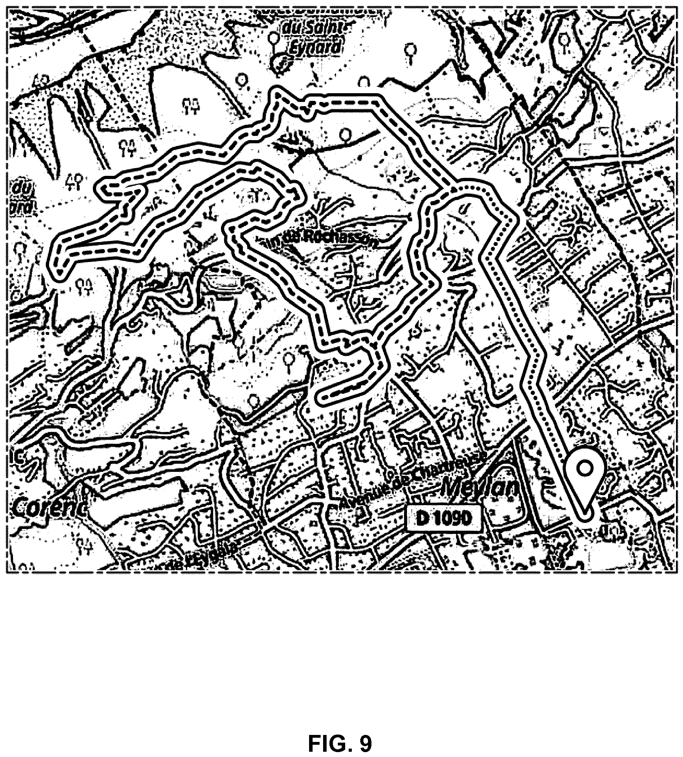

Although increasing the cutoff parameter solves the issue in this case, it results in greater preprocessing and, in other situations, the right elevation regions might be just above the cutoff again. Therefore, an additional step is proposed to solve this problem, which consists of selecting an intermediate point that is at an appropriate minimum elevation level and computing the shortest path segment to reach that point from the starting point, and then generating a path taking the elevation into account according to the method previously described from the intermediate point to create a tour as illustrated in **Figure 9.** This means that the tour starts and ends with the same access path between the starting and intermediate point.

**Claims**

1. A method, using a data processor, to generate a tour that begins at and returns to a starting point, the tour being personalized according to user preferences, which include a specified length, and in which a geographical map including a set of road crossings and roads between the road crossings is arranged as a graph in which the road crossings are represented as nodes and the roads between the road crossings are represented as arcs, the data processor computing the tour using the graph as follows:

   - scoring the arcs of the graph according to the user preferences;
   - initializing the tour by adding one or more path segments;
   - optimizing the tour by replacing some of its path segments with path segments having a path segment score representing a path segment that promotes the user preferences;
   - outputting the tour for display on a user interface.

2. A method according to claim 1, wherein said initializing links a first arc leaving the starting point and a second arc entering the starting point with the shortest path segment, and wherein said initializing sets a current node to the starting point of the tour, and wherein said optimizing further comprises, while the total length of the tour is inferior to a given threshold determined by the specified length and an acceptable margin, iteratively performing the following steps:

- Drawing a random distance d to travel on the next arc to add to the tour from a continuous probability distribution with a given set of parameters;
- Computing the set of nodes in the graph within a given distance from the current node;
- If the set of nodes computed at the previous step is empty, go back to step a) eventually modifying the set of parameters, otherwise, continue performing the following steps;
- For each node p of the set of nodes, iteratively performing the following steps:

    a) Computing the path segment score of a computed path segment from the current node to the node p, such as the shortest path segment;
    b) Verifying that there exists a path segment from the node p back to the starting point of the tour such that the total length of the tour does not exceed the specified length of the path segment;
    c) Computing the path segment score of the computed path;

- Sorting the list of candidate nodes according to the path segment score of their associated computed path segment; and
- Choosing the node associated with the path segment having the highest score, or randomly choose one from the best k paths, k being a parameter of the method.

**3.** A method according to claim 2 comprising the following additional steps of post processing aiming at avoiding detours in the tour:

- Creating a list of non-conform detours by finding path segments of the tour being longer than the shortest path segment from the starting node of the path segment to the end node of the path segment by a given factor;
- Restricting the list of non-conform detours to the path segments of the tour having a score lower than a given threshold;
- Replacing the path segments in the list of non-conform detours by their associated shortest path segments.

**4.** A method to generate for a user a personalized closed tour, in which an initial closed tour is generated through a method according to any one of claims 2 or 3, wherein the following steps are further performed:

- Defining the initial route as a subset of arcs of the tour
- For a given number of iterations, performing the following steps:
For each pair of consecutive directed arcs AB and EF in the route, where A, B, E, and F are nodes of the graph, iteratively performing the following steps:

    i. Enumerating all the feasible tour wherein the previously chosen path segment from B to E is substituted by a sequence comprising:

        • A new arc CD;
        • The shortest path segment from B to C;
        • The shortest path segment from D to E;

    ii. For each new path segment from B to E, iteratively performing the following steps:

        a. Evaluating the path segment score of each new tour
        b. Sorting the list of new tour by their path segment score
        c. Choosing the new tour having the highest path segment score, or randomly choose one from the best k tours, k being a given integer;
        d. Updating the route by selecting a number of arcs of the current tour.

**5.** A method according to claim 4 comprising the following additional steps of post processing aiming at avoiding detours in the closed tour:

- Creating a list of non-conform detours by finding path segments of the tour being longer than the shortest path segment from the starting node of the path segment to the end node of the path segment by a given factor;
- Restricting the list of non-conform detours to the path segments of the tour having a path segment score lower than a given threshold;
- Replacing the path segments in the list of non-conform detours by their associated shortest path segment.

6. A method according to any of the preceding claims, wherein a sub-tour score is a function of at least a sub-score evaluating the type of road represented by each arc of the sub-tour.

7. A method according to any of the preceding claims, wherein a sub-tour score is a function of at least a sub-score promoting arcs having parks, forest, rivers, or hiking trail within a given distance.

8. A method according to any of the preceding claims, wherein a sub-tour score is a function of at least a sub-score promoting arcs having artistic works, religious edifices or any other architectural attraction relevant to the user preferences within a given distance.

9. A method according to any of the preceding claims, wherein a sub-tour score is a function of at least a sub-score penalizing arcs having a main road within a given distance.

10. A method according to any of the preceding claims, wherein a sub-tour score is a function of at least a sub-score penalizing sequences of two arcs where their associated roads on the map form a geometrically tight turn.

11. A method according to any of the preceding claims, wherein a sub-tour score is a function of at least a sub-score penalizing sub-tours traversing the same arc or node more than one time.

12. A method according to any one of the preceding claims, wherein the user preferences further comprise elevation preferences.

13. A method according to claim 12, wherein the elevation preferences comprise:

    - a desired elevation gain interval, said elevation gain being the sum of all positive elevation among the arcs of the tour; and/or
    - a desired maximum steepness.

14. A method according to claim 13, wherein the length of the arcs of the graph is replaced by a weight term comprising:

    - the length of the arc;
    - a penalty term for penalizing any arc having a steepness higher than the user's desired maximum steepness.

15. A method according to any one of claims 13 or 14, wherein the score optimization method is a hierarchical optimization method wherein the first objective is to achieve the desired elevation gain and the second objective is to maximize the path segment score while keeping the elevation gain as a constraint.

16. A method according to any one of claims 13 or 15, wherein an additional step is performed before constructing a first tour, said additional step comprising selecting an intermediary point which elevation gain from the starting point is the desired one within a given margin.

17. Computer program product comprising code instructions to execute a method according to one of claims 1 to 16 for generating a tour.

18. A computer-readable medium, on which is stored a computer program product comprising code instructions to execute a method according to one of claims 1 to 16 for generating a tour.

19. Use of a method according to one of claims 1 to 16 for generating tours for sport or leisure activities such as running, hiking, cycling, ski touring, tourism and shopping.

**FIG. 1**

**FIG. 2**

**FIG. 3**

Take an initial feasible path segement
and an associated route as input — 201

— 202

For each iteration

For each pair of
consecutive
directed edges
AB, EF in the
route — 203

Explore the possible insertions of a
new arc CD to the tour, by replacing
the linking path from B to E by {SP(B,
C), CD, SP(D, E)} — 204

200

Among the feasible new tours, choose
randomly one among the k tours with
the highest score — 205

Update the route by selecting N(i)
directed edges, with the highest
score or randomly sampled from the
current tour — 206

return the current tour — 207

**FIG. 4**

FIG. 5

300

301

A tour computed by
method 100 or 200

302

For each
segment from
the tour

303

length(SEG) > 2 * length(SP)
AND
score(SEG) < 0.5 *
(max_score(SEG) * nb_arcs(SEG))
AND
sp_score/sp_cost >= 0.3 *
seg_score/seg_cost

FALSE

TRUE

304

Replace SEG by SP

305

Return the post-processed tour

FIG. 6

400

401

Which
preference
profile?

Alpine

Flat

Hilly

402a

$if\ abs(steepness) < 0.20$

403a

$10 \times (abs(steepness) - 0.05)$

402h

$if\ abs(steepness) < 0.10$

$10 \times (abs(steepness) - 0.1)$

403h

402f

$if\ abs(steepness) < 0.05$

403f

$20 \times (abs(steepness) - 0.2)$

404

$penalty = 0$

**FIG. 7**

**FIG. 8**

FIG. 9

Europäisches
Patentamt

European
Patent Office

Office européen
des brevets

# EUROPEAN SEARCH REPORT

Application Number

EP 19 30 5425

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GUNAWAN ALDY ET AL: "Orienteering Problem: A survey of recent variants, solution approaches and applications", EUROPEAN JOURNAL OF OPERATIONAL RESEARCH, ELSEVIER, AMSTERDAM, NL, vol. 255, no. 2, 6 May 2016 (2016-05-06), pages 315-332, XP029630823, ISSN: 0377-2217, DOI: 10.1016/J.EJOR.2016.04.059 * the whole document * | 1-19 | INV. G01C21/34 |
| A | THOMAS A. FEO ET AL: "Greedy Randomized Adaptive Search Procedures", JOURNAL OF GLOBAL OPTIMIZATION, vol. 6, no. 2, 1 March 1995 (1995-03-01), pages 109-133, XP055627803, NL ISSN: 0925-5001, DOI: 10.1007/BF01096763 * the whole document * | 1-19 | |
| A | VICENTE CAMPOS ET AL: "GRASP with path relinking for the orienteering problem", JOURNAL OF THE OPERATIONAL RESEARCH SOCIETY., vol. 65, no. 12, 1 December 2014 (2014-12-01), pages 1800-1813, XP055627806, GB ISSN: 0160-5682, DOI: 10.1057/jors.2013.156 * the whole document * | 1-19 | TECHNICAL FIELDS SEARCHED (IPC) G01C |

The present search report has been drawn up for all claims

| Place of search | Date of completion of the search | Examiner |
|---|---|---|
| The Hague | 1 October 2019 | van Doornum, A |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8655591 B

- US 8768613 B

**Non-patent literature cited in the description**

- **P. VANSTEENWEGEN ; W. SOUFFRIAU ; D.V. OUDHEUSDEN.** The orienteering problem: A survey. *European Journal of Operational Research,* 2011, vol. 209 (1), 1-10
- PleasantTourFinder: an application to find the most pleasant tour from a given location. **MERCIER D. ; SCHAUS P. ; SAINT-GUILLAIN M. ; DEVILLE Y.** Master Thesis. Univ Cath Louvain, 2016

- **B. LOEPP ; J. ZIEGLER.** *Recommending Running Routes: Framework and Demonstrator, 2nd Workshop on Recommendation in Complex Scenarios,* 2018
- **W. SOUFFRIAU ; P. VANSTEENWEGEN ; G. VANDEN BERGHE ; D. VAN OUDHEUSDEN.** The planning of cycle trips in the province of east flanders. *OMEGA,* vol. 39, 201, , 209-213